# EUROPEAN PATENT SPECIFICATION

(11) **EP 3 300 954 B1**
(45) Date of publication and mention of the grant of the patent: **24.04.2019**
(21) Application number: 17191202.5
(22) Date of filing: 14.09.2017
(51) Int. Cl.: B60R 1/078, B60S 1/56

(54) **TELESCOPING REARVIEW ASSEMBLY WITH CAMERA AND LENS WIPING SYSTEM**
TELESKOPISCHE RÜCKSICHTANORDNUNG MIT KAMERA UND OBJEKTIVWISCHSYSTEM
ENSEMBLE RÉTROVISEUR TÉLESCOPIQUE COMPORTANT UN SYSTÈME D'ESSUYAGE DE CAMÉRA ET D'OBJECTIF

(30) Priority: 30.09.2016 US 201615281780; 30.11.2016 US 201615364362
(43) Date of publication of application: 04.04.2018
(73) Proprietor: SMR Patents S.à.r.l., 2453 Luxembourg (LU)
(72) Inventor: Henion, Paul, Port Huron MI 48060 (US); Brooks, Darryl, Romeo MI 48065 (US); Sinelli, Garry, Birmingham MI 48009 (US)
(74) Representative: Weber-Bruls, Dorothée

(56) References cited:
- JP-A- 2010 155 484
- JP-A- 2013 006 481
- JP-A- 2014 133 440
- JP-A- 2015 182 656
- JP-U- S6 416 770
- US-A1- 2011 266 375
- US-A1- 2014 063 233

## Description

This application refers to a side-location rearview assembly comprising: one or more support arms attached to and extending from a base assembly configured for attachment to a side portion of a vehicle; a rearview housing slidingly attached to the one or more support arms such that the housing can telescope relative to the base assembly between a retracted, inboard position and an extended, outboard position; and at least one camera positioned within the housing and attached to the one or more support arms, the camera configured to provide images exterior to the vehicle through an elongated aperture in the housing, wherein the camera is configured to remain in a stationary position relative to the base assembly as the housing telescopes, and wherein the elongated aperture is configured such that the camera can obtain images exterior to the vehicle through the elongated aperture when the housing is in an inboard position and when the housing is in an outboard position.

Certain vehicles are equipped with structures such as tow bars and the like to tow trailers, campers, boats, mobile homes, etc. Sometimes the towed vehicles are so wide that typical side view mirrors do not extend far enough from the vehicle to allow the vehicle operator to see around the towed vehicle. Accordingly, it is known to equip the towing vehicle with side view mirrors that can extend, in a telescoping manner, from a retracted or inboard position that is relatively close to the vehicle to an extended or outboard position sufficient to allow the vehicle operator to adequately see around the towed vehicle. In certain embodiments, the towing vehicle can be equipped with cameras designed to enhance the view of the vehicle operator of hard-to-see areas around the periphery of the vehicle. In some embodiments, the cameras can be incorporated into the side-location rearview mirrors and configured to provide views of the sides and rear of the vehicles.

US 2014/0063244 discloses a telescoping mirror in which a camera is positioned in a housing window, but remains stationary relative to the vehicle. In one embodiment, a cover member is attached to the camera and seals the window on either side of the camera as the housing telescopes.

DE 10 2012 015 950 B3 discloses a camera cleaning system for cameras that are placed in the front or in the mirror of a vehicle. The cleaning system be actuated by several mechanisms, including the action of the driver or by regular automatic events like slow speed or folding a mirror.

In addition, JP 2013 006481 A1 describes a vehicle-mounted camera washer nozzle, US 2011/0266375 A1 a cover of a vehicle optical sensor, JP 2010 155484 A a back guide monitor camera, JP 2014 133440 A a camera device for a vehicle, JP 2015 182656 A a lens cover cleaning device of an electronic mirror and JP S64 16770 U a further camera system.

US 2014/0063233 A1 describes a generic side-location rearview assembly according to the preamble of claim 1.

Still, there are issues with dust, dirt, and grime entering the housing and soiling the elements, including camera lenses. It would be advantageous if telescoping side mirrors incorporating cameras could be improved. The present invention seeks to improve driver visibility in a number of ways. This objective is achieved by means of a side-location rearview assembly according to claim 1.

The improvements of the invention are described in the claims. Thus it is the astonishing perception of the invention to make usage of a housing maintenance system for keeping the housing clean, which comprises a lens cleaning system. Said housing maintenance system can comprise at least one flexible track for closing the aperture in areas adjacent the camera and/or the camera lens and/or a lens cleaning system. The flexible track can be attached to the camera and configured to cover a portion of the elongated aperture adjacent the camera regardless of the inboard or outboard position of the housing. The lens cleaning system comprises a bracket fixed to the housing and extending over the elongated aperture, a wiper holder disposed in the bracket, and at least one wiper element held by the wiper holder, whereby the wiper element is adapted to engage and clean the lens in the elongated aperture as the housing is telescoped between the inboard and outboard positions.

The invention will be described in the following with reference to schematic drawing:
- Figure 1: is a perspective view of a known telescoping side view mirror assembly incorporating a camera.
- Figure 2A: is a bottom view of the telescoping side view mirror assembly of Figure 1 illustrating the camera with a mirror head in a retracted position.
- Figure 2B: is a bottom view of the telescoping side view mirror assembly of Figure 1 illustrating the camera with a mirror head in an extended position.
- Figure 3A: is a cross-sectional view, taken along the line 3--3 of Fig. 2A, of a portion of the telescoping side view mirror assembly of Figure 1.
- Figure 3B: is a cross-sectional view like Figure 3A, taken along the line 3--3 of Fig. 2A but illustrating an alternative example.
- Figure 4A: is a cross-sectional view, taken along the line 4--4 of Fig. 2A, of a portion of the telescoping side view mirror assembly of Figure 1.
- Figure 4B: is a cross-sectional view like Figure 4A, taken along the line 4--4 of Fig. 2A but illustrating the alternative example shown in Figure 3B.
- Figure 4C: is a cross-sectional view like Figure 4B, but illustrating a further example.
- Figure 5: is an exploded view of the embodiment of Figure 4C.
- Figures 6A and 6B: are cross-sectional views similar to Figs 3A and 4A respectively, but they depict a side-location rearview assembly according to the invention with a lens cleaning system.
- Figure 6C: is a cross-sectional view similar to Fig. 6A, but showing an embodiment with an additional lens cleaning feature.

The present invention will now be described with occasional reference to the specific embodiments of the invention. This invention may, however, be embodied in different forms and should not be construed as limited to the embodiments set forth herein. Rather, these embodiments are provided so that this disclosure will be thorough and complete, and will fully convey the scope of the invention to those skilled in the art.

Unless otherwise defined, all technical and scientific terms used herein have the same meaning as commonly understood by one of ordinary skill in the art to which this invention belongs. The terminology used in the description of the invention herein is for describing particular embodiments only and is not intended to be limiting of the invention. As used in the description of the invention and the appended claims, the singular forms "a," "an," and "the" are intended to include the plural forms as well, unless the context clearly indicates otherwise.

Unless otherwise indicated, all numbers expressing quantities of dimensions such as length, width, height, and so forth as used in the specification and claims are to be understood as being modified in all instances by the term "about." Accordingly, unless otherwise indicated, the numerical properties set forth in the specification and claims are approximations that may vary depending on the desired properties sought to be obtained in embodiments of the present invention. Notwithstanding that the numerical ranges and parameters setting forth the broad scope of the invention are approximations, the numerical values set forth in the specific examples are reported as precisely as possible. Any numerical values, however, inherently contain certain errors necessarily resulting from error found in their respective measurements.

The description and figures disclose a side view mirror assembly (hereafter "mirror assembly") having a camera with a fixed position relative to a telescoping mirror head. Generally, the camera is positioned within the mirror head in a fixed position relative to the side of the vehicle as the mirror head telescopes from a retracted position to an extended position. The term "side view mirror", as used herein, is defined to mean an assembly attached to the vehicle and which permits the vehicle operator to adequately see around the towed vehicle. The assembly includes a mirror head, one or more support arms and a mirror base assembly. This definition of side view mirror is intended to include those embodiments wherein the side view mirror is attached to any portion of the vehicle. The term "mirror head", as used herein, is defined to mean an assembly including a housing, a scalp, a mirror and devices for rotating the mirror. The term "support arms", as used herein, is defined to mean structures configured to extend the mirror head from the side of a vehicle. The term "mirror base assembly", as used herein, is defined to mean one or more structures configured to attach the mirror head and support arms to the side of a vehicle. The terms "telescopes" or "telescoping," as used herein, is defined to mean the movement of the mirror head relative to the vehicle generally along the axis of the support arms, typically although not necessarily corresponding to an inboard or retracted position and an outboard or extended position.

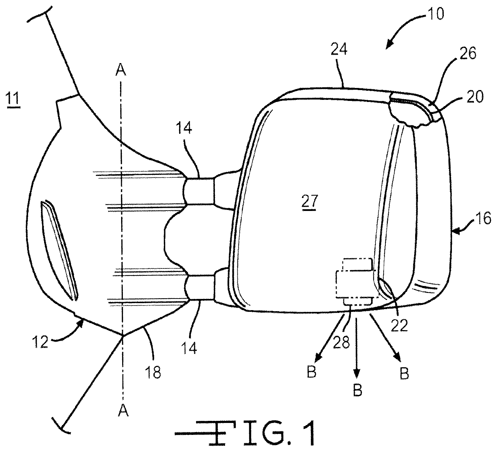

Referring now to Fig. 1, a known mirror assembly is shown generally at 10. The mirror assembly 10 is configured for installation on a vehicle 11. In certain embodiments, the mirror assembly 10 is configured for installation on a side door of the vehicle. However, it should be understood that in other embodiments the mirror assembly 10 can be installed on other portions of the vehicle, such as for example the non-limiting examples of the frame, quarter panels or fenders. The mirror assembly 10 is further configured to provide the occupants of the vehicle with a view extending to the rear of the vehicle. In certain embodiments, the mirror assembly 10 can optionally be configured as a break-away design, although it should understood that the mirror assembly 10 can be practiced without a break-away design.

The mirror assembly 10 includes a mirror base assembly 12, one or more support arms 14 and a mirror head 16. The mirror base assembly 12 and support arms 14 are known in the industry and therefore will only be briefly described herein.

The mirror base assembly 12 is configured to attach the support arms 14 and the mirror head 16 to the vehicle 11. In the illustrated embodiment, the mirror base assembly 12 includes a base structure (not shown) and a base cover 18. The base structure is configured to mount the support arms 14 to the vehicle 11. Any desired mechanism, device or structure, sufficient to mount the support arms 14 to the vehicle 11 can be used. Optionally, the base structure can be configured such that the support arms 14 can pivot about a substantially vertical axis A-A (Fig. 1). However, it should be understood that the mirror assembly 10 can be practiced without pivoting of the support arms 14 about the axis A--A. In still other embodiments, the mirror assembly 10 can be configured to pivot about an axis that is not substantially vertical.

The base cover 18 is configured to cover the base structure with an aesthetically pleasing appearance that may or may not match the color and finish of the vehicle. Any desired base cover 18 can be used.

The support arm or arms 14 extend from the mirror base assembly 12 and are configured to connect the mirror base assembly 12 with the mirror head 16. In the illustrated embodiment, the support arms 14 are hollow and have an ovular cross-sectional shape. However in other embodiments, the support arms 14 can have other cross-sectional shapes, such as circular cross-sectional shapes, sufficient to connect the mirror base assembly 12 with the mirror head 16. In the illustrated embodiment, the support arms 14 have internal mechanisms and devices configured to retract and extend the mirror head 16 in a direction along a length of the support arms 14. However, it should be appreciated that in other embodiments, the mechanisms and devices for retracting and extending the mirror head 16 can be positioned in other locations, such as for example the non-limiting example of within the mirror head 16. Mechanisms and devices for telescoping the mirror head 16 relative to the base 12 and vehicle 11 are well known in the art and need not be described in detail herein, see e.g. US Patent 7,748,857.

While the embodiment shown in Fig. 1 illustrates a quantity of two support arms 14, it should be appreciated that in other embodiments a quantity of one support arm or more than two support arms can be used.

Referring again to Fig. 1, the mirror head 16 is configured for several functions. First, the mirror head 16 is configured to support a mirror 20. The mirror 20 will be discussed in more detail below. Second, the mirror head 16 is configured as an enclosure for devices and mechanisms arranged to initiate and control movement of the mirror 20 relative to the mirror head 16. Non-limiting examples of such devices and mechanisms include drive motors, rack and pinion gears and the like. Third, the mirror head 16 is configured for movement along the support arms 14, often from a retracted position to an extended position. In an extended position, the mirror head positions the mirror 20 for better vision around a wide towed vehicle. Fourth, the mirror head 16 is configured as an enclosure for a camera 22. The camera 22 will be discussed in more detail below.

The mirror head 16 includes a housing 24. The housing 24 may be of any desired shape and includes various outer walls that merge together in a smooth manner such as to present a pleasing appearance. A rearward facing portion of the housing 24 is open and forms a cavity 26. The cavity 26 is configured to receive the mirror 20. The mirror 20 may be any suitable type, such as a flat, concave or convex mirror, or the type which automatically adjusts to reduce glare. A suitable shaped support member (not shown) is secured within the housing 24 and serves to movably support the mirror 20 within the cavity 26. The support member may include suitable mechanisms, such as drive motors and the like for remote control adjustment of the mirror 20, as well as various devices for heating the mirror 20 if desired. As thus far described, the mirror assembly 10 is typical to the existing mirror assemblies commonly employed on various vehicles.

Referring again to Fig. 1, a forward-facing, decorative scalp 27 is attached to the housing 24 and is configured to enclose the forward-facing portion of the housing 24. As with the base cover 18, the scalp 27 can have an aesthetically pleasing appearance that may or may not match the color and finish of the vehicle. The scalp 27 is configured to move with the mirror head 16, as the mirror head 16 moves along the support arms 14. The scalp 27 will be discussed in more detail below.

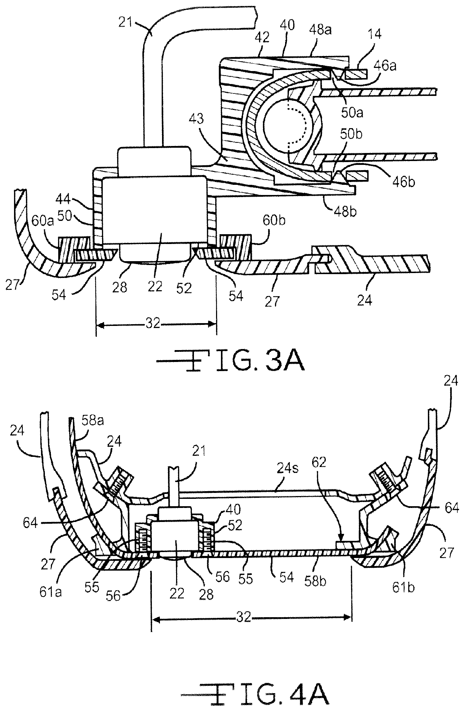

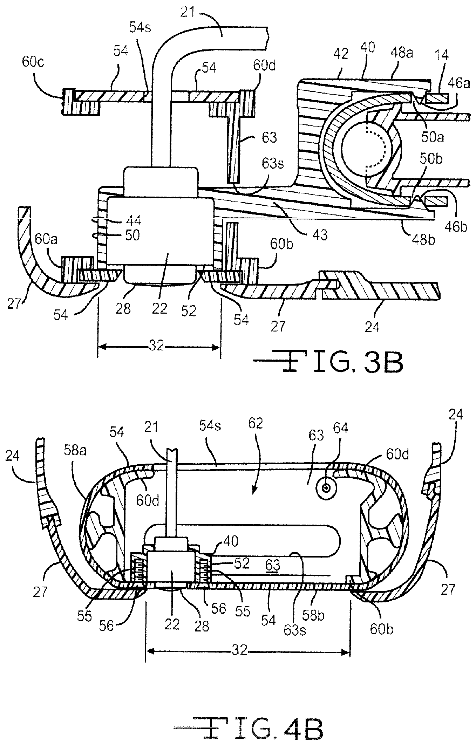

Referring again to Fig. 1, the mirror head 16 is further equipped with the camera 22. In the illustrated embodiment, the camera 22 is of the type to provide real-time digital images. However, in other embodiments, the camera 22 can provide other types of images. Optionally, the images from the camera 22 can be digitally combined with other images from other cameras to provide the vehicle occupants with a virtual "around-the-vehicle" view. While not shown in Fig. 1, power and image conducting cables 21 (see Figs 3A, 3B, 4A and 4B) can extend from the camera. In certain embodiments, the power and image conducting cables 21 can be ducted through the support arms 14 to controls located within the interior of the vehicle.

The camera 22 is positioned such that a viewing lens 28 is oriented in a direction to provide images in generally downward and outward directions as indicated by the direction arrows B. However, it should be appreciated that the camera 22 and the viewing lens 28 can be positioned in other orientations suitable to provide other images. It should also be appreciated that the camera 22 can be equipped with different types of lens to provide different desired visual effects or images. As non-limiting examples, the camera 22 can be equipped with a wide-angle or fish-eye lens suitable to provide desired peripheral images. While the embodiment illustrated in Fig. 1 illustrates a single camera 22, in other embodiments more than one camera may be positioned within the mirror head 16.

Referring again to Fig. 1 and as will be discussed in more detail below, the camera 22 is attached to the support arms 14 such that the camera 22 remains stationary relative to the side of the vehicle as the mirror head 16 telescopes along a length of the support arms 14, from a retracted, inboard position to an extended, outboard position or to intermediate positions.

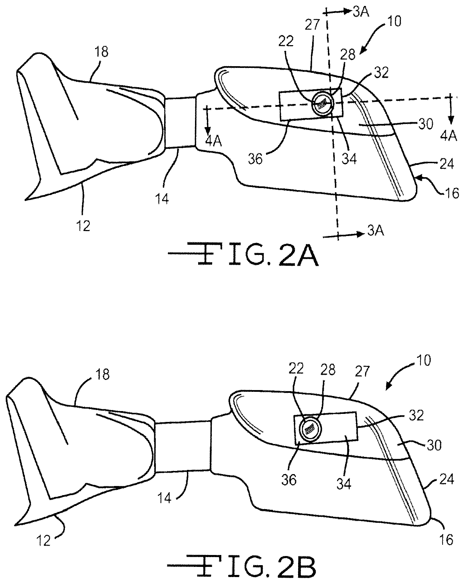

Referring now to Figs. 2A and 2B, a view of the bottom of the mirror assembly 10 is illustrated. As discussed above, the forward-facing scalp 27 is attached to the housing 24 of the mirror head 16. The scalp 27 includes a bottom portion 30. The bottom portion 30 of the scalp 27 includes an aperture 32. The aperture 32 is configured to provide the lens 28 of the camera 22 with a viewing port through the bottom portion 30 of the scalp 27 as the mirror head 16 moves along the support arms 14. In the illustrated embodiment, the aperture 32 has a rectangular cross-sectional shape. However, in other embodiments, the aperture 32 can have other cross-sectional shapes, such as for example an ovular cross-sectional shape, sufficient to provide the lens 28 of the camera 22 with a viewing port through the scalp 27 as the mirror head 16 moves in a telescoping manner relative to the camera 22, which remains in a fixed position relative to the support arms 14, the base unit 18 and the towing vehicle 11. The aperture 32 has a first end 34 and a second end 36, both of which will be discussed in more detail below.

Referring now to Fig. 2A, the mirror head 16 is shown in a retracted position. In a retracted position, the mirror head 16 is positioned along a length of the support arms 14 such as to be located relatively close to the vehicle (not shown). As a result of the retracted position of the mirror head 16, the camera 22 is positioned such that the lens 28 is exposed through the first end 34 of the aperture 32.

Referring now to Fig. 2B, the mirror head 16 is shown in an extended position. In an extended position, the mirror head 16 is positioned along a length of the support arms 14 such as to be further away from the vehicle (not shown) and allow the vehicle occupants to adequately see around the towed vehicle. As a result of the extended position of the mirror head 16, the camera 22 is positioned such that the lens 28 is exposed through the second end 36 of the aperture 32. The aperture 32 is generally elongated along an axis parallel to the support arms 14, but may take on any of alternative elongated shapes such as rectangular, trapezoidal, elliptical or oval.

While Figs. 2A and 2B show the extreme positions of the lens 28 of the camera 22 relative to the aperture 32 as the mirror head 16 travels along the support arms 14, i.e., from a retracted position to an extended position, it should be appreciated that the mirror head 16 can have an infinite number of intermediate positions between the retracted position and the extended position. Accordingly, the aperture 32 is configured to provide the lens 28 of the camera 22 with a viewing port through the scalp 27 regardless of the position of the mirror head 16 along the support arms 14.

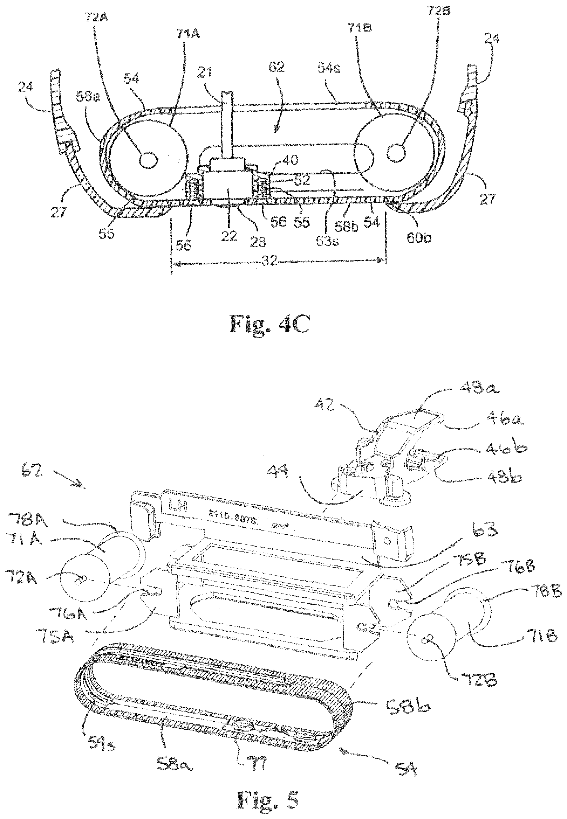

Referring now to Figs. 3A and 4A, portions of the camera 22, housing 24, scalp 27, lens 28, aperture 32 and a support arm 14 are illustrated. A camera holder 40 includes a first segment 42 configured for attachment to the support arm 14 and a second segment 44 configured to receive the camera 22. The first segment 42 and second segment 44 are joined by an intermediate portion, such as the neck portion 43. The first segment 42 includes snap nibs 46a and 46b positioned on opposing attachment arms 48a and 48b. The attachment arms 48a and 48b are configured to span the support arm 14 such that the snap nibs 46a and 46b engage and seat in opposing apertures 50a and 50b located on the support arm 14. Once the snap nibs 46a and 46b are seated in the apertures 50a and 50b, the camera holder 40 is fixed in position against the support arm 14. Accordingly, the camera holder 40 is stationary relative to the support arm 14 and does not move as the mirror head 16 moves in a telescoping manner along a length of the support arm 14. As best shown in Figure 5, the snap nibs 46a, 46b and corresponding receiving apertures 50a, 50b may be elongated, such as in the direction of telescoping movement, to provide greater stability against dislodgement as the housing 24 telescopes. Alternatively, the snap nibs or barb features may be found on the support structure rather than on the camera holder, and these cooperate with corresponding apertures or receiving mating features on the camera holder.

While the embodiment of the mirror assembly 10 illustrated in Figs. 3A and 4A show the camera holder 40 attached to the support arm 14 by use of snap nibs 46a and 46b, in other embodiments the camera holder 40 can be attached to the support arm 14 by other structures, mechanisms and devices, such as the non-limiting examples of threaded fasteners, adhesives, clips and clamps.

In still another embodiment, the camera holder 40 may be secured to support structures other than the support arm 14 by attaching devices such as snap nibs similar to 46a and 46b springing into corresponding slots or apertures. In this embodiment, the slots or apertures may be located in other parts of the assembly, such as on ribs or tabs (not shown) formed in the housing 24 or the scalp 27. As a consequence of attachment at these locations, the camera remains stationary with respect to the housing.

Referring now to Figs. 3A and 4A, the second segment 44 of the camera holder 40 includes an annular boss 50. The annular boss 50 is configured to form a camera cavity 52. The camera cavity 52 is configured to receive the camera 22. The camera 22 may be retained in the camera cavity 52 by friction fit, fastener, adhesive or a flexible track 54. In the illustrated embodiment, the flexible track 54 is secured to the camera holder 40 by insertion of a plurality of threaded fasteners 56 into threaded apertures 55 (as shown in Fig. 4A, 4B). However, in other embodiments the flexible track 54 can be secured to the camera holder 40 by other structure, mechanisms and devices, including the non-limiting examples of snaps, clips and clamps.

Referring now to the embodiment of Fig. 4A, the flexible track 54 has a first portion 58a and a second portion 58b. The first and second portions 58a and 58b are configured to cover portions of the aperture 32 not engaged by the lens 28 of the camera 22 as the mirror head 16 moves along the support arms 14 (side to side as viewed in Figure 4A). The mirror head 16 is shown in Fig. 4A in the extended position. In this position, the camera 22 is engaged with an inboard portion of the aperture 32 and the second portion 58b of the flexible track 54 covers the outboard portion of the aperture 32. In this manner, the second portion 58b of the flexible track 54 substantially protects the camera 22 from environmental elements, substantially blocks the camera 22 from wind noise and provides substantial continuity to the scalp 27 for an aesthetically pleasing appearance. While the camera 22 is engaged with the inboard portion of the aperture 32, the first portion 58a of the flexible track 54 extends between openings formed between portions of the housing 24 within the interior mirror head 16.

Referring still to Fig. 4A, in the alternative scenario where the mirror head 16 is in the retracted position, the camera 22 is engaged with an outboard portion of the aperture 32 and the first portion 58a of the flexible track 54 returns from the flexed position to cover the inboard portion of the aperture 32. While the camera 22 is engaged with the outboard position of the aperture 32, the second portion 58b of the flexible track 54 extends in a flexed manner between openings formed between portions of the housing 24 within the interior of mirror head 16.

Referring again to the embodiment shown in Figs. 3A and 4A, the flexible track 54 is made from one or more flexible polymeric materials or films, such as for example polyurethane, polyethylene, including low density polyethylene (LDPE), polypropylene, and/or thermoplastic elastomer (TPE). Alternatively, the flexible track 54 can be made from other materials or other combinations of materials having sufficient flexibility and hardness (durometer) to allow portions of the track 54 alternatively to flex into the housing or to extend to provide a protective covering of the aperture 32.

Referring again to Figs. 3A and 4A, opposing track guides 60a and 60b are attached to the interior of the mirror head 16 and move with the mirror head 16 as the mirror head 16 moves along the support arms 14. In this manner, the opposing track guides 60a and 60b form a channel configured to maintain the first and second portions 58a and 58b of the flexible track 54 in a slideable orientation relative to the mirror head 16. It will be appreciated that the track guides 60a and 60b may be part of a larger track guide assembly 62 that is secured to a portion of the mirror housing 24 or its scalp 27 by fasteners such as one or more screws 64. Bosses may be formed in the housing for this purpose, and slots such as 24s may be formed in housing 24 to accommodate the cables 21 or neck 43 as the mirror head 16 telescopes relative to the camera 22. The track guide assembly may include track guides bearing on an upper surface of flexible track 54, such as track guides 60a and 60b; or on a lower surface of flexible track 54, such as track guides 61a and 61b; or both.

Referring again to Figs. 3A and 4A, in operation the housing 24, scalp 27 and track guides 60a and 60b move together as a single unit with the mirror head 16 as the mirror head 16 moves along portions of the support arms 14. The support arms 14, camera 22, camera holder 40 and track 54 do not move as the mirror head moves. Regardless of the position of the mirror head 16 along the support arms 14, the lens 28 of the camera 22 is configured to view through a portion of the aperture 32 and the remainder of the aperture 32 is covered by one or both of the first and second portions 58a and 58b of the flexible track 54.

Referring now to Figs. 3B and 4B, an alternate embodiment of the mirror assembly 10 is illustrated. Many portions of the base assembly 12, the support arms 14, mirror head 16, camera 22, lens 28, and aperture 32 are as described above in connection with Figs. 3A and 4A. For example, camera holder 40 includes a first segment 42 configured for attachment to the support arm 14 and a second segment 44 configured to receive the camera 22. The first segment 42 and second segment 44 are joined by an intermediate portion, such as the neck or web 43 which, in this embodiment, may be more elongated than the neck or web 43 of Fig 3A. Other portions are structurally and operatively substantially the same as in the embodiment previously described, such that the camera holder 40 is stationary relative to the support arm 14, mirror base 12 and vehicle 11, and the camera 22 does not move as the mirror head 16 moves in a telescoping manner along a length of the support arm 14 occupying any of infinite intermediate positions between and including a fully retracted position and a fully extended position.

Referring now to the alternate embodiment shown in Fig. 4B, the flexible track 54 is a continuous loop, having a first portion 58a and a second portion 58b, as before, but these are joined together to form a continuous band. A slot 54s may be formed in the back side of the band to allow power and signaling cables 21 to pass through the band 54. Alternatively, the cable(s) 21 may be diverted laterally to avoid having to pass through the band. When present, slot 54s does not extend to the first and second portions 58a and 58b which remain intact and attached to the camera housing 44. Consequently, portions 58a and 58b are able to cover portions of the elongated aperture 32 not engaged by the lens 28 of the camera 22 as the mirror head 16 moves along the support arms 14 (side to side as viewed in Figure 4B).

As the mirror head 16 telescopes while the camera 22 remains stationary, the flexible track band 54 remains attached to the camera housing 44 and "rolls" within the housing 24, much like a tractor or tank tread. Multiple track guides 60a, 60b, 60c, 60d may be part of a larger track guide assembly 62 that maintains the flexible track band in proper orientation for "rolling" or sliding as the mirror head 16 telescopes relative to the fixed position of the camera 22. The internal track guides 60a, 60b, 60c and 60d may form a U-shaped channel in which the flexible track band 54 slides, and track guides at the two ends of the loop may be connected by a web or flange 63, which includes an elongated slot 63s through which the neck 43 protrudes, thus allowing the mirror head 16 to telescope back and forth while the camera 22 remains fixedly positioned on the support arm 14. Track guides bearing on an outer surface of flexible track 54 such as track guides 61a and 61b (see Fig. 4A) may also be employed, but are less important in the loop embodiment.

The track guide assembly 62 is secured to the housing 24 using fasteners such as screws 64. Bosses may be molded into the track guide assembly 62 or housing 24 for this purpose. Alternative fastening means, such as hooks, clips, welds, snap nibs, barbs and the like may be employed. In at least one variation, as illustrated in Fig. 4B, the flange 63 includes at least one aperture through which screw 64 secures the flange 63 of the track guide assembly 62 to a boss (not shown) extending from housing 24. More than one such fastener or fastener type may be used.

The mirror head 16 is shown in Fig. 4B in the extended position with the camera 22 engaged with an inboard portion of the aperture 32, and with the second portion 58b of the flexible track 54 being straightened out or "unrolled" to cover the outboard portion of the aperture. In this manner, the second portion 58b of the flexible track 54 substantially protects the camera 22 from environmental elements, substantially blocks the camera 22 from wind noise and provides substantial continuity to the scalp 27 for an aesthetically pleasing appearance, while the first portion 58a of the flexible track 54 rolls up around the track guide assembly 62 within the housing 24.

In the alternative scenario where the mirror head 16 telescopes to the retracted position, the camera 22 is engaged with an outboard portion of the aperture 32 and the first portion 58a of the flexible track 54 "unrolls" or straightens from the looped position to cover the inboard portion of the aperture 32, while the second portion 58b of the flexible track 54 "rolls up" around the track guide assembly 62 within the interior of mirror head 16.

Still referring to the embodiment shown in Figs. 3B and 4B, the flexible track band 54 is made from one or more flexible polymeric materials or films, such as for example polyurethane, polyethylene, including low density polyethylene (LDPE), polypropylene, and/or thermoplastic elastomer (TPE). Alternatively, the flexible track 54 can be made from other materials or other combinations of materials having sufficient flexibility and hardness (durometer) to allow portions of the track 54 to alternatively "roll up" around the track guide and straighten or "unroll" to provide a protective covering of the aperture 32. In an embodiment of the invention, shown in Figures 4C and 5, the flexible track 54 rolls around roller drums 71A and 71B having axles 72A and 72B that are shafts rotatably journaled in the track guide assembly 62. As best seen in Figure 5, the track guide assembly 62 may include at each end a pair of plates or sidewall extensions 75A, 75B having apertures for rotatably journaling the shafts of roller drum axles 72A and 72B. For example, the plates or extensions 75A, 75B may be provided with forked slots 76A and 76B into which the axle shafts may be inserted for securely supporting the roller drums in a rotatable manner. Alternatively, roller drum axle shaft end faces may be rounded or conical and fit into an indentation or aperture in sidewall extensions of the track guide assembly 62. Roller drums 71A and 71B may optionally be provided with a reduced diameter central portion that is wide enough to accommodate the width of the flexible track 54, and larger diameter end portions that create flanges 78A,78B that serve the function of track guides (analogous to 60a, 60b, 60c and 60d) to retain the flexible track in position aligned with the aperture 32. The flexible track and/or the roller drums may be designed with transverse ridges or treads 77 to improve frictional engagement of the track with the roller drums.

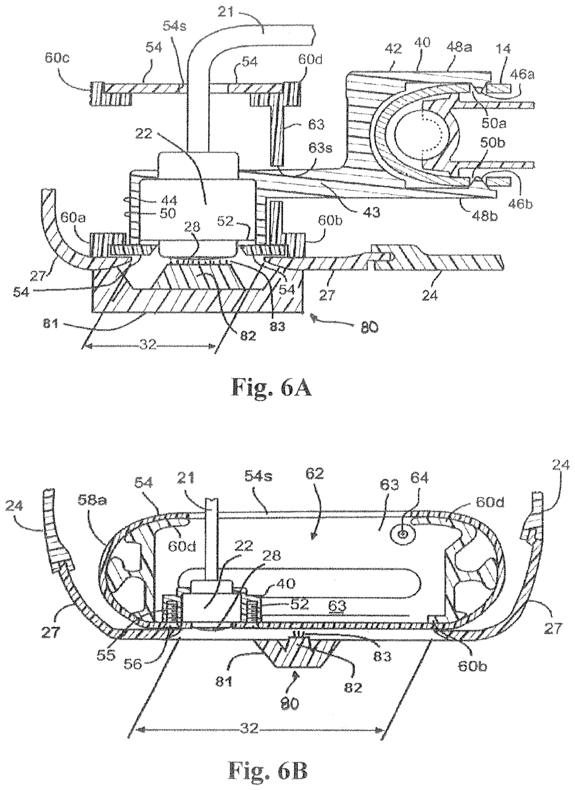

Referring now, to Figures 6A and 6B, a feature of the invention is shown for cleaning the camera lens 28. A lens cleaning system 80 is designed to keep the camera lens 28 clear of dust, dirt, and other road debris associated with driving vehicles. According to the invention, the lens cleaning system 80 includes a bracket 81 that extends over the elongated aperture 32 to support a wiper element 83 in a position where it will engage the lens 28 as the housing 24 telescopes. "Extending over" in this context does not mean occluding the whole elongated aperture 32. To the contrary, the wiper element 83 and the whole cleaning system 80 will typically occupy not more than about one-third of the length of the elongated aperture 32 (for example, 30% or less, 25% or less, or 20% or less), and is in a central region of the aperture. This ensures that the camera lens 28 is still operational and not occluded at the extreme inboard and extreme outboard positions, yet each time the housing telescopes, the wiper element 83 passes over and engages the lens 28 to wipe it clean.

In the embodiment shown in Figure 6A, the bracket 81 does span the width of the elongated aperture 32 attaching to the housing scalp 27 both fore and aft of the aperture 32. This may be optimal to provide better rigidity to the wiper element 83, but spanning the aperture is not required by the term "extending over" the aperture.

The bracket 81 may be made of plastic or similar material as the housing 27. In fact, the bracket 81 may be molded integrally with the housing 24 (or its scalp 27), or it may be a separate part that is attached to the housing or scalp by fasteners such as screws, rivet, snap-fittings or the like. The wiper holder 82 may likewise be molded as part of the bracket 81 or it may be a distinct part for ease of replacement. The wiper holder 82, whether integral or a separate part, holds and supports the wiper element 83 at a position just into the path of the lens 28. Thus, each time the housing 24 and its cleaning system 80 telescopes past the lens 28, the wiper element 83 can engage and clean or "squeegee" the lens 28.

The wiper element 83 is not limited in composition, but is generally of a resilient nature to maintain contact with the camera lens 28. Resilient springs or pads (not shown) may be used between the holder 82 and wiper element 83 to assist in maintaining contact of the wiper element with the camera lens. The wiper element 83 may be any fabric, elastomeric, sponge, brush, or combination of these. In some embodiments, the wiper element may be a molded elastomeric polymer blade, similar to a windshield wiper blade. This may serve as the sole or unitary wiper element. In other embodiments, the wiper element may be a composite assembly of two or more individual elements, such as both a brush and an elastomeric polymer blade, or both a fabric and an elastomeric polymer blade, or both a brush and a fabric. Some useful polymeric materials that may be molded into resilient wiper blade elements include TPE (thermoplastic elastomers), LDPE (low density polyethylene), natural rubber, and silicone. Regardless which type of wiper element 83 is used, the wiper element may desirably be a separate, replaceable element that facilitates maintenance and servicing of the lens cleaning system. An exhausted wiper element 83, whether blade or brush or fabric pad or a combination of these, can quickly and easily be extracted from the wiper holder 82, and a fresh, new wiper element 82 can be snapped into the wiper holder 82 in its place.

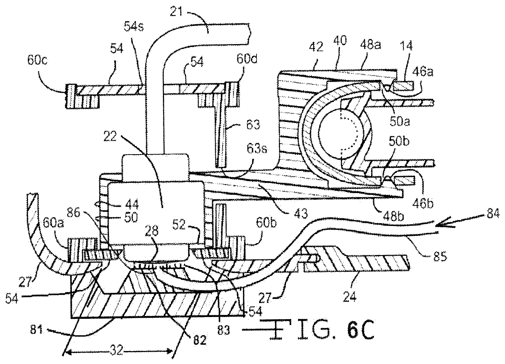

Figure 6C shows another embodiment of the housing maintenance system used in a side mirror assembly 10 of the invention. In this embodiment washer fluid from a source 84 is introduced into the system and travels down tube 85. At the end of tube 85 is an orifice 86. As fluid exits through the orifice 86 it is dispersed onto or into the area of wiper element 83. In this manner, as the housing 24 is telescoped past the lens 28, the wiper element 83 is now wetted and able to wash the lens 28. The manner with which the fluid is introduced into the tube 85 from the source 84 may be from a pump, a pressurized gas, or a gravity feed system, using solenoid valves or other conventional controls, any of which may be activated manually or automatically. In certain embodiments, the fluid is introduced into tube 85 when the mirror is telescoped (either when extended or when retracted, or both).

In a variation, the tube 85 and its orifice 86 could be aimed at the camera lens 28 itself rather than the wiper element 83. But since the housing 24 and camera lens 28 move relative to one another, the orifice 86 may be directed toward the lens 28 only as certain positions of the housing, such as the when the mirror housing 24 is in the retracted position. In this manner, the lens 28 is wetted just prior to the housing 24 being telescoped outwardly, then as the wiper 83 passes over the lens 28, a squeegee action cleans the lens 28. Alternatively, the orifice 86 may be directed toward the lens 28 when the mirror housing 24 is in the extended position. In this manner, the lens 28 is wetted just prior to the housing being telescoped inwardly, then as the wiper 83 passes over the lens 28, a squeegee action cleans the lens 28.

The principle and mode of operation of the side view mirror assembly with a stationary camera and telescoping mirror head has been described in certain embodiments.

However, it should be noted that the side view mirror assembly with a stationary camera and telescoping mirror head may be practiced otherwise than as specifically illustrated and described without departing from its scope as defined in the appended claims.

### REFERENCE SINCE LIST

- 10: mirror assembly
- 11: vehicle
- 12: mirror base assembly
- 14: support arm
- 16: mirror head
- 18: base cover
- 20: mirror
- 21: cable
- 22: camera
- 24: housing
- 24s: slot
- 26: cavity
- 27: scalp
- 28: lens
- 30: bottom portion
- 32: aperture
- 34: first end
- 36: second end
- 40: camera holder
- 42: first segment
- 43: neck portion
- 44: second segment, camera housing
- 46a, 46b: snap nib
- 48a, 48b: attachment arm
- 50: annular boss
- 50a, 50b: aperture
- 52: camera cavity
- 54: flexible track
- 54s: slot
- 55: threaded aperture
- 56: threaded fastener
- 58a: first portion
- 58b: second portion
- 60a-60d: track guide
- 61a, 61b: track guide
- 62: track guide assembly
- 63: flange
- 63s: slot
- 64: screw
- 71A, 71B: drum
- 72A, 72B: axle
- 75A, 75B: sidewall extension
- 76A, 76B: forked slot
- 77: ridge or tread
- 78A, 78B: flange
- 80: lens cleaning system
- 81: bracket
- 82: wiper holder
- 83: wiper element
- 84: source
- 85: tube
- 86: orifice

## Claims

1. A side-location rearview assembly (10) comprising:
• one or more support arms (14) attached to and extending from a base assembly (12) configured for attachment to a side portion of a vehicle (11);
• a rearview housing (24) slidingly attached to the one or more support arms (14) such that the housing (24) can telescope relative to the base assembly (12) between a retracted, inboard position and an extended, outboard position; and
• at least one camera (22) positioned within the housing (24) and attached to the one or more support arms (14), the camera (22) configured to provide images exterior to the vehicle (11) via a lens (28) having a view area through an elongated aperture (32) in the housing (24), wherein the camera (22) is configured to remain in a stationary position relative to the base assembly (12) as the housing (24) telescopes, and wherein the elongated aperture (32) is configured such that the camera (22) can obtain images exterior to the vehicle (11) through the elongated aperture (32) when the housing (24) is in an inboard position and when the housing (24) is in an outboard position;
**characterized by**
a housing maintenance system for keeping the housing clean and operable,
with the housing maintenance system comprising a lens cleaning system (80), and
with the lens cleaning system (80) comprising a bracket (81) fixed to the housing (24) and extending over the elongated aperture (32), a wiper holder (82) disposed in the bracket (81), and at least one wiper element (83) held by the wiper holder (82), whereby the wiper element (83) is adapted to engage and clean the camera lens (28) in the elongated aperture (32) as the housing (24) is telescoped between the inboard and outboard positions.

2. The side-location telescoping rearview assembly of claim 1, **characterized in that** the camera lens (28) is configured to remain in a stationary position relative to the base assembly (12) as the housing (24) telescopes, wherein the elongated aperture (32) is configured relative to the camera lens (28) such that the camera (22) can obtain view area images exterior to the vehicle (11) through the elongated aperture (32) as the housing (24) is telescoped between the inboard and outboard positions.

3. The side-location telescoping rearview assembly of claim 1 or 2, **characterized in that** the housing maintenance system comprises at least one flexible track (54) for closing the aperture (32) in areas adjacent the camera (22) and/or the camera lens (28),
with preferably
the flexible track (54) being attached to the camera (22), and/or
the flexible track (54) being held in position within the housing (24) by one or more track guides (60a - 60d).

4. The side-location telescoping rearview assembly of any one of the preceding claims ,
**characterized in that**
the bracket (81) is integrally molded with a portion of the rearview housing (24) or is attached to the rearview housing (24) by fasteners.

5. The side-location telescoping rearview assembly of any one of the preceding claims,
**characterized in that**
the wiper element (83) is selected from a brush, a fabric, an elastomeric blade, or a combination thereof, and/or
the wiper element (83) comprises a material selected from a thermoplastic elastomer (TPE), a low density polyethylene (LDPE), rubber, felt, soft fabric, or a sponge-like material, and/or
the wiper element (83) occupies less than one third the length of the elongated aperture (32).

6. The side-location telescoping rearview assembly of any one of the preceding claims,
**characterized in that**
the housing maintenance system, in particular the lens cleaning system (80), comprises at least one source (84) of washer fluid and a dispensing element, in particular in form of a tube (85), configured to dispense washer fluid onto the wiper element (83) and/or onto the camera lens (28), and/or
the housing maintenance system, in particular the lens cleaning system (80),comprises a pressure system for dispensing washer fluid onto the camera lens (28) under pressure.

7. The side-location telescoping rearview assembly of any one of the preceding claims,
**characterized in that**
the aperture (32) has a rectangular cross-sectional shape.

8. The side-location telescoping rearview assembly of any one of the preceding claims,
**characterized in that**
the the flexible track (54) is guided by opposing track guides (60a - 60d).

9. The side-location telescoping rearview assembly of any one of the preceding claims,
**characterized in that**
the flexible track (54) forms a continuous band within the housing (24),
with preferably
a track guide assembly (62) being provided which has track guides (60a - 60d), that retain the flexible track (54) in a loop within the housing (54).

10. The side-location telescoping rearview assembly of claim 9, **characterized in that** the track guide assembly (62) includes a pair of roller drums (71A, 71B) that support the flexible track (54) in a loop within the housing (54),
with preferably the roller drums (71A, 71B) are rotatably journaled in side extensions (75A, 75B) of the track guide assembly (62).

11. The side-location telescoping rearview assembly of claim 10, **characterized in that** the roller drums (71A, 71B) have a reduced diameter central portion for accommodating a width of the flexible track (54), and larger diameter end portions that provide shoulders to retain the flexible track (54) on the roller drums (71A, 71B).

12. The side-location telescoping rearview assembly of claim 10 or 11, **characterized in that**
the flexible track (54) includes transverse ridges for frictional engagement with the roller drums (71A, 71B).

13. The side-location telescoping rearview assembly of any one of the preceding claims,
**characterized by**
a camera holder (40), the camera holder (40) having at least a pair of opposing snap nibs (46a, 46b), preferably provided by a pair of attachment arms (48a, 48b); and
the opposing snap nibs (46a, 46b) being attached into corresponding receiving apertures (50a, 50b) in the one or more support arms (14) within the telescoping rearview housing (24).

14. The side-location telescoping rearview assembly of claim 13, **characterized in that** the camera holder (40) has a first segment (42) with the opposing snap nibs (46a, 46b) at one end and a second segment (44) including an annular boss (50) at the other end, with the annular boss (50) being configured to form a camera cavity (52).

15. The side-location telescoping rearview assembly of claim 14, **characterized in that** the camera (22) is retained in the camera cavity (52) by friction fit, fastener, adhesive and/or the flexible track (54),
with preferably
the flexible track (54) being secured to the camera holder (40) by insertion of a plurality of threaded fasteners (56) into threaded apertures (55) or by snaps, clips and/or clamps.

## Patentansprüche

1. Seitliche Rückblickanordnung (10), umfassend:
• einen oder mehrere Tragarme (14), die an einer Basisanordnung (12), die zur Befestigung an einem Seitenbereich eines Fahrzeugs (11) konfiguriert ist, befestigt sind und sich von dieser erstrecken;
• ein Rückblickgehäuse (24), das verschiebbar an den einen oder mehreren Tragarmen (14) befestigt ist, so dass das Gehäuse (24) in Bezug auf die Basisanordnung (12) zwischen einer eingefahrenen Innenbordposition und einer ausgefahrenen Außenbordposition teleskopieren kann; und
• mindestens eine Kamera (22), die innerhalb des Gehäuses (24) angeordnet und an den einen oder mehreren Tragarmen (14) befestigt ist, wobei die Kamera (22) dazu konfiguriert ist, Bilder außerhalb des Fahrzeugs (11) über eine Linse (28), die einen Sichtbereich durch eine längliche Öffnung (32) in dem Gehäuse (24) aufweist, bereitzustellen, wobei die Kamera (22) dazu konfiguriert ist, in einer stationären Position relativ zur Basisanordnung (12) zu verbleiben, wenn das Gehäuse (24) teleskopiert, und wobei die längliche Öffnung (32) so konfiguriert ist, dass die Kamera (22) Bilder außerhalb des Fahrzeugs (11) durch die längliche Öffnung (32) aufnehmen kann, wenn sich das Gehäuse (24) in einer Innenbordposition befindet und wenn sich das Gehäuse (24) in einer Außenbordposition befindet;
**gekennzeichnet durch**
ein Gehäusewartungssystem, um das Gehäuse sauber und betriebsfähig zu halten, wobei das Gehäusewartungssystem ein Linsenreinigungssystem (80) umfasst und wobei das Linsenreinigungssystem (80) einen Bügel (81), der am Gehäuse (24) befestigt ist und sich über die längliche Öffnung (32) erstreckt, einen Wischerhalter (82), der im Bügel (81) angeordnet ist, und mindestens ein Wischerelement (83), das von dem Wischerhalter (82) gehalten wird, umfasst, wobei das Wischerelement (83) geeignet ist, die Kameralinse (28) in der länglichen Öffnung (32) zu erfassen und zu reinigen, wenn das Gehäuse (24) zwischen den Innen- und Außenbordpositionen teleskopiert wird.

2. Seitliche teleskopische Rückblickanordnung nach Anspruch 1, **dadurch gekennzeichnet, dass**
die Kameralinse (28) dazu konfiguriert ist, in einer stationären Position relativ zur Basisanordnung (12) zu verbleiben, wenn das Gehäuse (24) teleskopiert, wobei die längliche Öffnung (32) in Bezug auf die Kameralinse (28) so konfiguriert ist, dass die Kamera (22) Sichtbereichsbilder außerhalb des Fahrzeugs (11) durch die längliche Öffnung (32) aufnehmen kann, wenn das Gehäuse (24) zwischen den Innen- und Außenbordpositionen teleskopiert wird.

3. Seitliche teleskopische Rückblickanordnung nach Anspruch 1 oder 2, **dadurch gekennzeichnet, dass**
das Gehäusewartungssystem mindestens eine flexible Bahn (54) zum Verschließen der Öffnung (32) in an die Kamera (22) und/oder die Kameralinse (28) angrenzenden Bereichen umfasst,
wobei vorzugsweise
die flexible Bahn (54) an der Kamera (22) befestigt ist und/oder
die flexible Bahn (54) in Position innerhalb des Gehäuses (24) durch eine oder mehrere Bahnführungen (60a - 60d) gehalten wird.

4. Seitliche teleskopische Rückblickanordnung nach einem der vorangehenden Ansprüche, **dadurch gekennzeichnet, dass**
der Bügel (81) integral mit einem Abschnitt des Rückblickgehäuses (24) geformt ist oder durch Befestigungselemente an dem Rückblickgehäuse (24) befestigt ist.

5. Seitliche teleskopische Rückblickanordnung nach einem der vorangehenden Ansprüche, **dadurch gekennzeichnet, dass**
das Wischerelement (83) aus einer Bürste, einem Gewebe, einem elastomeren Blatt oder einer Kombination derselben ausgewählt ist und/oder
das Wischerelement (83) ein Material umfasst, ausgewählt aus einem thermoplastischen Elastomer (TPE), einem Polyethylen niedriger Dichte (LDPE), Gummi, Filz, weichem Gewebe oder einem schwammartigen Material, und/oder
das Wischerelement (83) weniger als ein Drittel der Länge der länglichen Öffnung (32) einnimmt.

6. Seitliche teleskopische Rückblickanordnung nach einem der vorangehenden Ansprüche, **dadurch gekennzeichnet, dass**
das Gehäusewartungssystem, insbesondere das Linsenreinigungssystem (80), mindestens eine Quelle (84) von Waschflüssigkeit und ein Abgabeelement, insbesondere in Form eines Schlauches (85), das dazu konfiguriert ist, Waschflüssigkeit auf das Wischerelement (83) und/oder auf die Kameralinse (28) abzugeben, umfasst, und/oder
das Gehäusewartungssystem, insbesondere das Linsenreinigungssystem (80), ein Drucksystem zum Abgeben von Waschflüssigkeit auf die Kameralinse (28) unter Druck umfasst.

7. Seitliche teleskopische Rückblickanordnung nach einem der vorangehenden Ansprüche, **dadurch gekennzeichnet, dass**
die Öffnung (32) eine rechteckige Querschnittsform aufweist.

8. Seitliche teleskopische Rückblickanordnung nach einem der vorangehenden Ansprüche, **dadurch gekennzeichnet, dass**
die flexible Bahn (54) durch gegenüberliegende Bahnführungen (60a - 60d) geführt wird.

9. Seitliche teleskopische Rückblickanordnung nach einem der vorangehenden Ansprüche, **dadurch gekennzeichnet, dass**
die flexible Bahn (54) ein kontinuierliches Band innerhalb des Gehäuses (24) bildet, wobei vorzugsweise
eine Bahnführungsanordnung (62) vorgesehen ist, die Bahnführungen (60a - 60d) aufweist, die die flexible Bahn (54) in einer Schleife innerhalb des Gehäuses (24) halten.

10. Seitliche teleskopische Rückblickanordnung nach Anspruch 9, **dadurch gekennzeichnet, dass**
die Bahnführungsanordnung (62) ein Paar von Rollentrommeln (71A, 71B) enthält, die die flexible Bahn (54) in einer Schleife innerhalb des Gehäuses (24) tragen,
wobei vorzugsweise
die Rollentrommeln (71A, 71B) in seitlichen Erweiterungen (75A, 75B) der Bahnführungsanordnung (62) drehbar gelagert sind.

11. Seitliche teleskopische Rückblickanordnung nach Anspruch 10, **dadurch gekennzeichnet, dass**
die Rollentrommeln (71A, 71B) einen Mittelabschnitt mit geringerem Durchmesser zum Aufnehmen einer Breite der flexiblen Bahn (54) und Endabschnitte mit größerem Durchmesser, die Schultern zum Halten der flexiblen Bahn (54) auf den Rollentrommeln (71A, 71B) bereitstellen, aufweisen.

12. Seitliche teleskopische Rückblickanordnung nach Anspruch 10 oder 11, **dadurch gekennzeichnet, dass**
die flexible Bahn (54) Querkanten zum Reibschluss mit den Rollentrommeln (71A, 71B) enthält.

13. Seitliche teleskopische Rückblickanordnung nach einem der vorangehenden Ansprüche, **gekennzeichnet durch**
einen Kamerahalter (40), wobei der Kamerahalter (40) mindestens ein Paar gegenüberliegender Rastnasen (46a, 46b) aufweist, die vorzugsweise durch ein Paar von Befestigungsarmen (48a, 48b) bereitgestellt sind; und
wobei die gegenüberliegenden Rastnasen (46a, 46b) in entsprechenden Aufnahmeöffnungen (50a, 50b) in den einen oder mehreren Tragarmen (14) innerhalb des teleskopischen Rückblickgehäuses (24) befestigt sind.

14. Seitliche teleskopische Rückblickanordnung nach Anspruch 13, **dadurch gekennzeichnet, dass**
der Kamerahalter (40) ein erstes Segment (42) mit den gegenüberliegenden Rastnasen (46a, 46b) an einem Ende und ein zweites Segment (44) einschließlich einem ringförmigen Vorsprung (50) am andern Ende aufweist, wobei der ringförmige Vorsprung (50) dazu konfiguriert ist, einen Kamerahohlraum (52) zu bilden.

15. Seitliche teleskopische Rückblickanordnung nach Anspruch 14, **dadurch gekennzeichnet, dass**
die Kamera (22) im Kamerahohlraum (52) durch Reibpassung, Befestigungselemente, Haftmittel und/oder die flexible Bahn (54) gehalten wird,
wobei vorzugsweise
die flexible Bahn (54) an dem Kamerahalter (40) durch Einsetzen einer Vielzahl von Schraubbefestigungselementen (56) in Gewindeöffnungen (55) oder durch Schnappverschlüsse, Clips und/oder Klemmen befestigt ist.

## Revendications

1. Ensemble de rétroviseur latéral (10) comprenant :
• un ou plusieurs bras supports (14) fixés à et s'étendant à partir d'un ensemble de base (12) configuré pour la fixation à une partie latérale d'un véhicule (11) ;
• un boîtier de rétroviseur (24) fixé de manière coulissante aux un ou plusieurs bras supports (14) de telle sorte que le boîtier (24) peut télescoper par rapport à l'ensemble de base (12) entre une position in-bord rétractée et une position hors-bord étendue ; et
• au moins une caméra (22) positionnée à l'intérieur du boîtier (24) et fixée aux un ou plusieurs bras supports (14), la caméra (22) étant configurée pour fournir des images à l'extérieur du véhicule (11) via une lentille (28) ayant une zone de vision par une ouverture allongée (32) dans le boîtier (24), dans lequel la caméra (22) est configurée pour rester dans une position stationnaire relativement à l'ensemble de base (12) lorsque le boîtier (24) télescope, et dans lequel l'ouverture allongée (32) est configurée de telle sorte que la caméra (22) peut obtenir des images à l'extérieur du véhicule (11) par l'ouverture allongée (32) lorsque le boîtier (24) est dans une position in-bord et lorsque le boîtier (24) est dans une position hors-bord ;
**caractérisé par**
un système de maintenance de boîtier pour maintenir le boîtier propre et opérable, le système de maintenance de boîtier comprenant un système de nettoyage de lentille (80), et le système de nettoyage de lentille (80) comprenant un support (81) fixé au boîtier (24) et s'étendant par-dessus l'ouverture allongée (32), un support d'essuie-glace (82) disposé dans le support (81), et au moins un élément d'essuie-glace (83) tenu par le support d'essuie-glace (82), dans lequel l'élément d'essuie-glace (83) est adapté pour engager et nettoyer la lentille de caméra (28) dans l'ouverture allongée (32) lorsque le boîtier (24) est déplacé de manière télescopique entre des positions in-bords et hors-bords.

2. Ensemble de rétroviseur télescopique latéral selon la revendication 1, **caractérisé en ce que** la lentille de caméra (28) est configurée pour rester dans une position stationnaire relativement à l'ensemble de base (12) lorsque le boîtier (24) télescope, dans lequel l'ouverture allongée (32) est configurée par rapport à la lentille de caméra (28) de telle sorte que la caméra (22) peut obtenir des images de zone de vision à l'extérieur du véhicule (11) par l'ouverture allongée (32) lorsque le boîtier (24) est déplacé de manière télescopique entre des positions in-bords et hors-bords.

3. Ensemble de rétroviseur télescopique latéral selon la revendication 1 ou 2, **caractérisé en ce que**
le système de maintenance de boîtier comprend au moins un lé flexible (54) pour fermer l'ouverture (32) dans des zones adjacentes à la caméra (22) et/ou à la lentille de caméra (28),
de préférence
le lé flexible (54) étant fixé à la caméra (22), et/ou
le lé flexible (54) étant maintenu en position à l'intérieur du boîtier (24) par un ou plusieurs guidages de lé (60a - 60d).

4. Ensemble de rétroviseur télescopique latéral selon l'une quelconque des revendications précédentes, **caractérisé en ce que**
le support (81) est moulé intégralement avec une partie du boîtier de rétroviseur (24) ou est fixé au boîtier de rétroviseur (24) par des attaches.

5. Ensemble de rétroviseur télescopique latéral selon l'une quelconque des revendications précédentes, **caractérisé en ce que**
l'élément d'essuie-glace (83) est choisi parmi une brosse, un tissu, une lame élastomère ou une combinaison de ceux-ci, et/ou
l'élément d'essuie-glace (83) comprend un matériau choisi parmi un élastomère thermoplastique (TPE), un polyéthylène basse densité (LDPE), du caoutchouc, du feutre, du tissu doux ou un matériau de type éponge, et/ou
l'élément d'essuie-glace (83) occupe moins d'un tiers de la longueur de l'ouverture allongée (32).

6. Ensemble de rétroviseur télescopique latéral selon l'une quelconque des revendications précédentes, **caractérisé en ce que**
le système de maintenance de boîtier, en particulier le système de nettoyage de lentille (80), comprend au moins une source (84) de liquide de lave-glace et un élément de distribution, en particulier sous la forme d'un tuyau (85), configuré pour distribuer du liquide de lave-glace sur l'élément d'essuie-glace (83) et/ou sur la lentille de caméra (28) et/ou le système de maintenance de boîtier, en particulier le système de nettoyage de lentille (80), comprend un système de pression pour distribuer le liquide de lave-glace sur la lentille de caméra (28) sous pression.

7. Ensemble de rétroviseur télescopique latéral selon l'une quelconque des revendications précédentes, **caractérisé en ce que**
l'ouverture (32) a une forme rectangulaire en coupe transversale.

8. Ensemble de rétroviseur télescopique latéral selon l'une quelconque des revendications précédentes, **caractérisé en ce que**
le lé flexible (54) est guidé par les guidages de lé opposés (60a - 60d).

9. Ensemble de rétroviseur télescopique latéral selon l'une quelconque des revendications précédentes, **caractérisé en ce que**
le lé flexible (54) forme une bande continue à l'intérieur du boîtier (24),
de préférence
un ensemble de guidage de lé (62) étant prévu, lequel a des guidages de lé (60a - 60d) qui maintiennent le lé flexible (54) dans une boucle à l'intérieur du boîtier (24).

10. Ensemble de rétroviseur télescopique latéral selon la revendication 9, **caractérisé en ce que**
l'ensemble de guidage de lé (62) inclut une paire de tambours à rouleaux (71A, 71B) qui supportent le lé flexible (54) dans une boucle à l'intérieur du boîtier (24),
de préférence
les tambours à rouleaux (71A, 71B) étant logés de manière rotative dans des prolongements latéraux (75A, 75B) de l'ensemble de guidage de lé (62).

11. Ensemble de rétroviseur télescopique latéral selon la revendication 10, **caractérisé en ce que**
les tambours à rouleaux (71A, 71B) ont une partie centrale de diamètre réduit pour accueillir une largeur du lé flexible (54) et des parties d'extrémité de diamètre plus grand qui fournissent des épaulements pour maintenir le lé flexible (54) sur les tambours à rouleaux (71A, 71B).

12. Ensemble de rétroviseur télescopique latéral selon l'une des revendications 10 ou 11, **caractérisé en ce que**
le lé flexible (54) inclut des arêtes transversales pour l'engagement par friction avec les tambours à rouleaux (71A, 71B).

13. Ensemble de rétroviseur télescopique latéral selon l'une quelconque des revendications précédentes, **caractérisé par**
un support de caméra (40), le support de caméra (40) ayant au moins une paire d'ergots d'encliquetage opposés (46a, 46b), de préférence fournis par une paire de bras de fixation (48a, 48b) ; et
les ergots d'encliquetage opposés (46a, 46b) étant fixés dans des ouvertures de réception correspondantes (50a, 50b) dans les un ou plusieurs bras supports (14) à l'intérieur du boîtier de rétroviseur télescopique (24).

14. Ensemble de rétroviseur télescopique latéral selon la revendication 13, **caractérisé en ce que** le support de caméra (40) a un premier segment (42) avec les ergots d'encliquetage opposés (46a, 46b) à une extrémité, et un deuxième segment (44) incluant un bossage annulaire (50) à l'autre extrémité, avec le bossage annulaire (50) étant configuré pour former une cavité de caméra (52).

15. Ensemble de rétroviseur télescopique latéral selon la revendication 14, **caractérisé en ce que**
la caméra (22) est maintenue dans la cavité de caméra (52) par ajustement par friction, attache, adhésif et/ou le lé flexible (54),
de préférence
le lé flexible (54) étant fixé au support de caméra (40) par insertion d'une pluralité d'attaches filetées (56) dans des ouvertures filetées (55) ou par des fermetures à encliquetage, des clips et/ou des pinces.
